# EUROPÄISCHE PATENTSCHRIFT

(11) **EP 4 484 190 B1**
(45) Veröffentlichungstag und Bekanntmachung des Hinweises auf die Patenterteilung: **22.04.2026**
(21) Anmeldenummer: 24177370.4
(22) Anmeldetag: 22.05.2024
(51) Int. Cl.: B60J 7/10, F16B 5/06

(54) **BEFESTIGUNGSVORRICHTUNG ZUM ERSTELLEN EINES FREI POSITIONIERBAREN BEFESTIGUNGSPUNKTES AN EINEM BIEGESCHLAFFEN FLÄCHENELEMENT SOWIE FLÄCHENELEMENT**
FASTENING DEVICE FOR CREATING A FREELY POSITIONABLE FASTENING POINT ON A FLEXIBLE SURFACE ELEMENT, AND SURFACE ELEMENT
DISPOSITIF DE FIXATION POUR ÉTABLIR UN POINT DE FIXATION POSITIONNABLE LIBREMENT SUR UN ÉLÉMENT DE SURFACE FLEXIBLE ET ÉLÉMENT DE SURFACE

(30) Priorität: 28.06.2023 DE 102023117041
(43) Veröffentlichungstag der Anmeldung: 01.01.2025
(73) Patentinhaber: Protanic Gartentechnik GmbH, 28816 Stuhr (DE)
(72) Erfinder: Krüger, Stephan, 26133 Oldenburg (DE)
(74) Vertreter: Weidner Stern Jeschke

(56) Entgegenhaltungen:
- EP-A1- 3 153 338
- US-A1- 2005 063 773
- US-A1- 2010 199 466

## Beschreibung

Die Erfindung betrifft eine Befestigungsvorrichtung zum Erstellen eines frei positionierbaren ersten Befestigungspunktes an einem biegeschlaffen Flächenelement, insbesondere an einer Plane oder an einer Gewebeplane, mit einem ersten Grundkörperteil und einem zweiten Grundkörperteil, wobei das erste Grundkörperteil ein erstes Eingriffsteil aufweist und das zweite Grundkörperteil ein erstes Aufnahmeteil aufweist, wobei das erste Grundkörperteil und das zweite Grundkörperteil in einer unmontierten Position separat und unverbunden vorliegen und in einer montierten Position durch zumindest eine Öffnung in der Flächenebene des Flächenelementes hindurch mittels eines formschlüssigen Fixierens des ersten Eingriffsteils mit dem ersten Aufnahmeteil entlang einer ersten Durchdringungsachse miteinander zu einem Grundkörper verbunden werden, wobei der Grundkörper eine erste kraftschlüssig mit dem Grundkörper verbundene Befestigungseinrichtung aufweist und in der montierten Position das Flächenelement zwischen dem ersten Grundkörperteil und dem zweiten Grundkörperteil gehalten ist und mittels der ersten Befestigungseinrichtung der erste Befestigungspunkt an einer Befestigungsposition des Flächenelements gebildet ist. Weiterhin betrifft die Erfindung ein Flächenelement, insbesondere eine Plane oder eine Gewebeplane oder eine Abdeckplane, mit einer solchen Befestigungsvorrichtung.

Bekannte Befestigungsvorrichtungen zum Erzeugen eines positionierbaren Befestigungspunktes, beispielsweise an einer Gewebeplane, sind als sogenannte Hohlnieten bekannt. Dabei wird ein erster ringförmiger Nietenteil mit einem zweiten ringförmigen Nietenteil durch ein im Flächenelement befindliches Loch zusammengeführt und miteinander vernietet, sodass aus den ringförmigen Nietenteilen eine Öse zum Einbringen beispielsweise eines Seils oder eines Hakens entsteht. Dabei muss das Flächenelement im Bereich des Befestigungspunktes durchdrungen und damit relativ großflächig beschädigt werden, um einen Befestigungspunkt zu erzeugen. Eine mechanische Koppelung erfolgt dabei nur über den Außenbereich der Öse, sodass ein Reißen der Gewebeplane durch eine Spannungskonzentration begünstigt wird.

Weiterhin sind Befestigungsvorrichtungen bekannt, welche um eine Kante oder einen Saum beispielsweise einer Abdeckplane gelegt und durch die Abdeckplane hindurch miteinander verklickt oder vernietet werden, sodass am Rand, an der Kante oder am Saum der Abdeckplane ein Befestigungspunkt entsteht, welcher allerdings außerhalb der eigentlichen Fläche der Abdeckplane angeordnet ist.

Für andere biegeschlaffe Flächenelemente, beispielsweise für Stoffe, sind zum Erzeugen eines Befestigungspunktes beispielsweise Knöpfe bekannt, welche allerdings angenäht werden müssen.

Die OA 04624 A offenbart einen Druckknopf, wobei zwei Bestandteile eines jeweiligen Teils des Druckknopfes mittels einer zylindrischen Rastverbindung durch eine Öffnung in einem jeweiligen Stoff hindurch verbunden werden. Dabei wird ein zentrales Nietelement verwendet, um die beiden Bestandteile formschlüssig zu verbinden.

Die DE 20 2015 104 747 U1 beschreibt einen Anschlagpunkt für Hebezeuge, wobei eine Hebe-Öse mittels einer Grundplatte an einem zu hebenden Gegenstand mittels Schrauben befestigt wird.

Weitere Befestigungsvorrichtungen sind aus der EP 3 153 338 A1, US 2010/199466 A1 und US 2005/063773 A1 bekannt.

Aufgabe der Erfindung ist es, den Stand der Technik zu verbessern.

Gelöst wird die Aufgabe durch eine Befestigungsvorrichtung zum Erstellen eines frei positionierbaren ersten Befestigungspunktes an einem biegeschlaffen Flächenelement, insbesondere an einer Plane oder an einer Gewebeplane, mit einem ersten Grundkörperteil und einem zweiten Grundkörperteil, wobei das erste Grundkörperteil ein erstes Eingriffsteil aufweist und das zweite Grundkörperteil ein erstes Aufnahmeteil aufweist, wobei das erste Grundkörperteil und das zweite Grundkörperteil in einer unmontierten Position separat und unverbunden vorliegen und in einer montierten Position durch zumindest eine Öffnung in der Flächenebene des Flächenelementes hindurch mittels eines formschlüssigen Fixierens des ersten Eingriffsteils mit dem ersten Aufnahmeteil entlang einer ersten Durchdringungsachse miteinander zu einem Grundkörper verbunden werden, wobei der Grundkörper eine erste kraftschlüssig mit dem Grundkörper verbundene Befestigungseinrichtung aufweist und in der montierten Position das Flächenelement zwischen dem ersten Grundkörperteil und dem zweiten Grundkörperteil gehalten ist und mittels der ersten Befestigungseinrichtung der erste Befestigungspunkt an einer Befestigungsposition des Flächenelements gebildet ist, wobei die erste Befestigungseinrichtung vollständig an einem der beiden Grundkörperteile angeordnet ist, sodass ein Bilden des ersten Befestigungspunktes entlang der Flächenebene an einer ersten Befestigungsseite des Flächenelementes frei von einer Durchdringung des Flächenelements mit der ersten Befestigungseinrichtung ermöglicht ist.

Dabei dient Befestigungseinrichtung insbesondere dem Aufnehmen eines Befestigungsseils und/oder einer Befestigungsleine zum Sichern des biegeschlaffen Flächenelementes, beispielsweise an einem Ring oder einem Befestigungsring. Insbesondere ist die Anordnung dabei derart ausgeführt und ausgebildet, dass das Flächenelement auch frei von einer Durchdringung mit dem Befestigungsseil und/oder der Befestigungsleine bleibt.

Es ist dabei ein Kerngedanke der Erfindung, durch die Anordnung der ersten Befestigungseinrichtung vollständig und ausschließlich an einem der beiden Grundkörperteile einen frei in der Fläche positionierbaren Befestigungspunkt erzeugen zu können und zudem mittels des ersten Eingriffsteils und des ersten Aufnahmeteils ein formschlüssiges Befestigen, insbesondere durch das biegeschlaffe Flächenelement hindurch, zu ermöglichen, wobei das biegeschlaffe Flächenelement insbesondere frei von einer Durchdringung durch die erste Befestigungseinrichtung ist.

Folgende Begriffe seien in diesem Zusammenhang erläutert:
Eine "Befestigungsvorrichtung" ist eine beispielsweise manuell oder mit einem Werkzeug, positionierbare Vorrichtung, mittels derer ein "Befestigungspunkt" zum Aufnehmen und Weiterleiten von Kräften an und von einem biegeschlaffen Flächenelement erstellt werden kann. Das "Erstellen" des Befestigungspunktes erfolgt dabei insbesondere mittels eines dauerhaften Verbindens jeweiliger Bauteile miteinander, wobei das biegeschlaffe Flächenelement dabei beispielsweise kraftschlüssig und/oder formschlüssig kontaktiert wird, sodass eine mechanische, insbesondere zugfeste Verbindung zwischen der Befestigungsvorrichtung und dem beigeschlaffen Flächenelement entsteht. Insbesondere ist das biegeschlaffe Flächenelement nach einem dauerhaften Verbinden der jeweiligen Bauteile miteinander zwischen diesen Bauteilen, also insbesondere zwischen dem ersten Grundkörperteil und dem zweiten Grundkörperteil, angeordnet.

Dabei ist die Befestigungsvorrichtung und der damit erzeugbare Befestigungspunkt "frei positionierbar", also beispielsweise an einem beliebigen, von einem Bediener ausgewählten Ort innerhalb einer Fläche des biegeschlaffen Elementes fixierbar. Dies ist beispielsweise durch selbsttätig das Flächenelement durchdringende Bestandteile des jeweiligen Grundkörpers erreichbar.

Ein "biegeschlaffes Flächenelement" ist in diesem Zusammenhang insbesondere eine Plane oder auch eine Gewebeplane, welche beispielsweise als Kunststofffolie, als gewebeverstärkte Kunststofffolie oder vergleichbar hergestellt ist und insbesondere zum Abdecken von beispielsweise Feuerholz, Baumaterialien oder auch beispielsweise feuchtigkeitsempfindlichen Apparaturen genutzt wird. Bei einer "Gewebeplane" ist dabei insbesondere innerhalb eines Planenkörpers ein Gewebe aus Fasern eingebracht, sodass ein beispielsweise folienartiger Kunststoffanteil der Gewebeplane zum Erzeugen einer Dichtigkeit von mechanischen Kräften entlastet ist. In diesem Zusammenhang koppelt die Befestigungsvorrichtung mechanisch auch, beispielsweise reibschlüssig oder kraftschlüssig, an den entsprechenden Gewebefasern an, sodass ein Kraftschluss zwischen Befestigungsvorrichtung und der Gewebeplane sichergestellt ist.

Zum Verständnis der Befestigungsvorrichtung sei zunächst von einer "unmontierten Position" ausgegangen, in der unterschiedliche Bestandteile der Befestigungsvorrichtung, nämlich ein "erstes Grundkörperteil" und ein "zweites Grundkörperteil" separiert voneinander vorliegen und erst beim Überführen in eine "montierte Position" zu einem gemeinsamen Grundkörper insbesondere formschlüssig verbunden werden. Das jeweilige "Grundkörperteil" liegt dabei vor dem Montieren, also in der unmontierten Position, als jeweilige geschlossene, jedoch vom anderen Grundkörperteil separierte mechanische Einheit vor. In der montierten Position hingegen sind beide Grundkörperteile sodann verbunden und liegen einstückig vor.

Zum Verbinden, respektive zum Montieren, weist das erste Grundkörperteil ein "erstes Eingriffsteil" auf, wobei das erste Eingriffsteil in ein zum ersten Eingriffsteil korrespondierendes "erstes Aufnahmeteil" eingebracht und mit diesem formschlüssig verbunden wird. Eingriffsteil und Aufnahmeteil sind dabei in ihrer Funktion gegeneinander austauschbar, wesentlich ist hierbei jedoch, dass der Eingriffsteil mit dem Aufnahmeteil jeweils einen festen, insbesondere in einer Normalrichtung zum Flächenelement wirkenden Kraftschluss erzeugt. Dieser Kraftschluss kann dabei beispielsweise durch ein Verschrauben, Verrasten oder Verklipsen des entsprechenden Eingriffsteils mit dem jeweiligen Aufnahmeteil erfolgen. Es sei hierzu erwähnt, dass das jeweilige Eingriffsteil und/oder das jeweilige Aufnahmeteil zum selbsttätigen Durchdringen des Flächenelementes während einer Montage, beispielsweise durch Aufbringen einer axialen Montagekraft, ausgebildet sein können.

Bezüglich des biegeschlaffen Flächenelements sei dieses durch eine "Flächenebene", also eine flächige Erstreckung orthogonal zu einer Dickenrichtung, definiert. Innerhalb der Flächenebene, also durch das Flächenelement hindurch, wird sodann zum Befestigen und Erzeugen des Befestigungspunktes eine "Öffnung", also beispielsweise ein lokaler Durchbruch, genutzt, wobei die Öffnung bereits vorher vorhanden sein kann oder erst für das Befestigen und Erzeugen des Befestigungspunktes geschaffen wird. Ebenso kann die Fähigkeit des Eingriffs oder der Aufnahme genutzt werden, um während der Montage die jeweilige Öffnung zu schaffen. So kann beispielsweise bei einem offenporigen Gewebe zum Abdecken ein entsprechender Bereich zwischen entsprechenden Gewebefasern als Öffnung vorliegen, womit keine zusätzliche Beschädigung des biegeschlaffen Flächenelementes erfolgen muss. Ebenso kann beispielsweise eine Gewebeplane nur im Bereich eines Kunststoffes durchdrungen werden oder durchdrungen sein, sodass insbesondere entsprechende Verstärkungsfasern unbeschädigt bleiben. In diesem Zusammenhang sei erwähnt, dass das Flächenelement auch ein Netz oder eine offenporige Plane sein kann.

Entlang der Öffnung und insbesondere orthogonal zur Flächenebene des Flächenelements ist eine "Durchdringungsachse" definiert, welche die grundsätzliche Wirkachse des Mechanismus zwischen Eingriffsteil und Aufnahmeteil beschreibt. Es sei hierzu erwähnt, dass die Durchdringungsachse dabei keinesfalls mathematisch exakt definiert sein muss, sondern beispielsweise eine grundsätzliche Verbindungsrichtung des Eingriffsteils mit dem Aufnahmeteil beschreibt und daher von einer exakt definierten Achse in Winkel und Geradlinigkeit im Rahmen von technisch bedingten Abweichungen variieren kann.

Eine "Befestigungseinrichtung" dient am mittels des Verbindens geschaffenen gemeinsamen Grundkörper zum Anbringen von beispielsweise einem Seil, einem Gurt oder einem Haken, einem Befestigungsseil oder einer Befestigungsleine, wobei die Befestigungseinrichtung dabei derart ausgebildet ist, dass ein Befestigen und Einleiten von Kräften ermöglicht ist. Beispielsweise ist diese Befestigungseinrichtung ein Loch, eine Bohrung, ein Ring und/oder ein Zapfen, insbesondere ein Gewindezapfen, wobei das Befestigen und Einleiten von Kräften jeweils mit zur Befestigungseinrichtung korrespondierenden Mitteln erfolgt. Dabei ist die jeweilige Befestigungseinrichtung erfindungsgemäß insbesondere einseitig am biegeschlaffen Flächenelement angeordnet.

Zur Funktion der Befestigungsvorrichtung sei nochmals erwähnt, dass das Flächenelement zwischen dem ersten Grundkörperteil und dem zweiten Grundkörperteil gehalten ist, also beispielsweise beim Bilden des gemeinsamen Grundkörpers zwischen den jeweiligen Grundkörperteilen eingeklemmt, eingeklipst, eingeschraubt oder eingebunden wird, sodass insbesondere ein teilweise reibschlüssig sowie teilweise formschlüssig wirkender mechanischer Anschluss geschaffen ist.

Der "erste Befestigungspunkt" beschreibt dabei eine technische Möglichkeit zum Befestigen und gleichsam beispielsweise einen idealisierten mathematischen Punkt, an dem beispielsweise ein Kraftvektor angreift und/oder ein Kraftvektor des an der Befestigungseinrichtung angeschlossenen Zugmittels die Flächenebene des Flächenelementes schneidet. Der erste Befestigungspunkt muss dabei nicht mathematisch exakt definiert sein, sondern kann beispielsweise auch global als Position eines Zapfens und/oder eines Ringes oder einer anders ausgebildeten Befestigungseinrichtung definiert sein, sodass beispielsweise an einer X-Y-Position in der Flächenebene des Flächenelementes der Befestigungspunkt an seiner Befestigungsposition definiert ist.

Gemäß einem wesentlichen Gedanken der Erfindung ist dabei die erste Befestigungseinrichtung "vollständig", also insbesondere ausschließlich und kraftverbindend, lediglich mit einem der beiden Grundkörperteile, also beispielsweise mit dem ersten Grundkörperteil oder dem zweiten Grundkörperteil, verbunden und an diesem angeordnet, sodass bei einem Verbinden der jeweiligen Grundkörperteile zum Grundkörper der erste Befestigungspunkt entlang der Flächenebene an einer "ersten Befestigungsseite", also an einer definierten Seite der Flächenebene, befestigt ist und damit die erste Befestigungseinrichtung und der erste Befestigungspunkt frei von einer Durchdringung des Flächenelementes mit dem Flächenelement verbunden sind. Im Bereich der ersten Befestigungseinrichtung und am ersten Befestigungspunkt ist daher keine Durchdringung des Flächenelementes und keine direkt am Befestigungspunkt angeordnete Öffnung notwendig, sodass insbesondere die mechanische Stabilität des Flächenelementes, beispielsweise gegen eine Rissausbreitung, besonders hochgehalten werden kann.

Um auch auf einer gegenüberliegend zur ersten Befestigungsseite angeordneten zweiten Befestigungsseite einen entsprechenden Befestigungspunkt anordnen zu können, ist eine zweite Befestigungseinrichtung vollständig am anderen der Grundkörperteile angeordnet und mittels der zweiten Befestigungseinrichtung in der montierten Position das Bilden eines zweiten Befestigungspunktes entlang der Flächenebene an der gegenüber der ersten Befestigungsseite angeordneten zweiten Befestigungsseite des Flächenelementes frei von einer Durchdringung des Flächenelementes mit der zweiten Befestigungseinrichtung ermöglicht.

Dabei ist insbesondere der andere Grundkörperteil in Bezug zu dem Grundkörperteil mit er ersten Befestigungseinrichtung mit der zweiten Befestigungseinrichtung analog zur ersten Befestigungseinrichtung ausgerüstet, sodass beidseitig des Flächenelementes eine Zugbelastung oder ein Einbringen von Kräften ermöglicht ist, wobei das Flächenelement am jeweiligen Befestigungspunkt frei von einer Durchdringung bleibt.

Gemäß der Erfindung weist das erste Grundkörperteil ein zweites, ein drittes, ein viertes und/oder ein weiteres Eingriffsteil und/oder das zweite Grundkörperteil ein zweites, ein drittes, ein viertes, und/oder ein weiteres Aufnahmeteil auf, wobei das erste Grundkörperteil und das zweite Grundkörperteil in einer montierten Position durch eine zweite Öffnung, eine dritte Öffnung, eine vierte Öffnung und/oder eine weitere Öffnung in der Flächenebene des Flächenelements hindurch mittels eines formschlüssigen Fixierens des jeweiligen Eingriffsteils mit einem jeweiligen Aufnahmeteil entlang einer zweiten Durchdringungsachse, entlang einer dritten Durchdringungsachse, entlang einer vierten Durchdringungsachse und/oder entlang einer weiteren Durchdringungsachse miteinander verbunden werden, wobei insbesondere die jeweiligen Durchdringungsachsen vom Befestigungspunkt beabstandet angeordnet sind.

Somit kann beispielsweise die Durchdringung des Flächenelements, beispielsweise einer Gewebeplane, mit mehreren, insbesondere im Vergleich zu einer Öse sehr kleinen, Öffnungen verteilt werden und somit ein flächiger Anschluss der jeweiligen Befestigungseinrichtung und/oder der gesamten Befestigungsvorrichtung erfolgen. Damit ist die mögliche Kraft, welche durch das Befestigungselement auf beispielsweise eine Gewebeplane übergeleitet werden kann, groß im Vergleich zu Lösungen, bei denen beispielsweise die Gewebeplane mit einem Hohlniet durchdrungen wird. Insbesondre wird durch das erfindungsgemäße Befestigungselement eine Kraftverteilung und damit eine Vermeidung von Kraftspitzen erreicht.

Insbesondere sind dabei die jeweiligen Durchdringungsachsen in einer matrixartigen Anordnung und/oder in einer mehreckigen Anordnung angeordnet, wobei die jeweiligen Durchdringungsachsen insbesondere symmetrisch zum ersten Befestigungspunkt und/oder symmetrisch zum zweiten Befestigungspunkt angeordnet sind.

Weiterhin kann oder können zwei Durchdringungsachsen, mehrere Durchdringungsachsen oder alle Durchdringungsachsen im Wesentlichen parallel zueinander angeordnet sein.

Mit einer parallelen Anordnung der jeweiligen Durchdringungsachsen zueinander oder zumindest einiger der Durchdringungsachsen zueinander ist ein Einbringen der Befestigungseinrichtungen orthogonal zur Flächenrichtung oder entlang einer gemeinsamen Befestigungsrichtung in einem Winkel zur Orthogonalen zur Flächenrichtung des Flächenelements möglich.

Um beispielsweise ein Schaffen der Öffnungen oder der Öffnung im Flächenelement während des Befestigens zu ermöglichen, weist oder weisen ein Eingriffsteil, mehrere Eingriffsteile oder alle Eingriffsteile eine in Richtung der jeweiligen Durchdringungsachse ausgerichtete Spitze zum Ausformen der jeweiligen Öffnung im Flächenelement auf. Dabei weist oder weisen der Eingriffsteil und/oder der jeweilige Eingriffsteil insbesondere einen runden Durchdringungsquerschnitt mit einer kegelförmigen Spitze auf. Somit ist der jeweilige Eingriffsteil dornartig ausgestaltet und kann beispielsweise an einer Gewebeplane zwischen entsprechenden Verstärkungsfasern hindurch die Gewebeplane durchdringen und die jeweiligen notwendigen Öffnungen schaffen, sodass das Anbringen der Befestigungsvorrichtung am Flächenelement ohne zusätzliche Werkzeuge zum Schaffen der Öffnungen erfolgen kann.

Gemäß der Erfindung ist ein Eingriffsteil und/oder ein jeweiliger Eingriffsteil mittels eines jeweiligen Eingriffshinterschnitts gegenüber einer Auszugsrichtung entlang der jeweiligen Durchdringungsachse rastend ausgebildet, wobei das jeweilige dem Eingriffsteil zugeordnete Aufnahmeteil mittels eines Aufnahmehinterschnitts gegenüber der Auszugsrichtung entlang der jeweiligen Durchdringungsachse rastend ausgebildet ist, wobei bei einem Miteinander-In-Eingriff-Bringen des jeweiligen Eingriffsteils mit dem jeweiligen Aufnahmeteil ein formschlüssig irreversibles Verbinden des ersten Grundkörperteils mit dem zweiten Grundkörperteil erfolgt.

Somit kann beispielsweise nach dem Prinzip eines Widerhakens oder einer einmalig irreversibel rastenden Verbindung ein Anbringen der Befestigungsvorrichtung am Flächenelement ermöglicht werden.

Ein jeweiliger "Eingriffshinterschnitt" sowie ein demgegenüber korrespondierend ausgebildeter "Aufnahmehinterschnitt" ist dabei gegenüber einer "Auszugsrichtung", in der die Befestigungsvorrichtung in einzelne Grundkörperteile zerfallen würde, formschlüssig rastend ausgebildet, sodass ein gegenseitiges Verrasten des Eingriffshinterschnitts mit dem jeweiligen Aufnahmehinterschnitt erfolgt, sobald die jeweiligen Grundkörperteile, insbesondere der Eingriffsteil mit dem jeweiligen Aufnahmeteil, einmalig verbunden wird. Entsprechende geometrische Gegebenheiten wie beispielsweise ein zwischen den Grundkörpern im Verbundenen Zustand erreichter Abstand, können dabei konstruktiv anhand einer Dicke einer Plane oder einer Gewebeplane eingestellt werden.

Um das Einleiten von Kräften in das Flächenelement, beispielsweise in rissempfindliche Planen, entlang einer freien Kraftrichtung zu ermöglichen, weist die erste Befestigungseinrichtung und/oder die zweite Befestigungseinrichtung einen jeweiligen Befestigungshalter auf, wobei der jeweilige Befestigungshalter durch eine jeweilige Befestigungsdurchführung im jeweiligen Grundkörperteil hindurchführbar ist und einen jeweiligen Hinterschnitt aufweist, wobei der jeweilige Hinterschnitt in eine jeweilige Hinterschnittaufnahme des jeweiligen Grundkörperteils verriegelbar ist und den jeweiligen Befestigungshalter in einer verriegelten Position in der Hinterschnittaufnahme formschlüssig fixiert und/oder der Befestigungshalter beweglich, insbesondere drehbar, gegenüberüber dem jeweiligen Grundkörperteil am jeweiligen Grundkörperteil aufgenommen ist.

Mittels des "Befestigungshalters", welcher als zusätzliches Element der Befestigungseinrichtung ausgeführt ist, kann beispielsweise ein variabler Anschluss von entsprechenden kraftleitenden Elementen erfolgen. Sofern der Befestigungshalter in einem jeweiligen Hinterschnitt formschlüssig aufgenommen ist, wird beispielsweise auch ein Drehen oder Verschwenken des Befestigungshalters und damit ein Drehen oder Verschwenken einer Zugachse gegenüber der Flächenrichtung des Flächenelements ermöglicht, sodass beispielsweise mittels eines Drehens des Befestigungshalters bei Böenlast auf einer Plane ein entsprechendes Entlasten durch Ausweichen der Plane ermöglicht ist.

Insbesondere weist der Befestigungshalter dabei zwei unterschiedlich große Flügel auf, welche insbesondere gegenüberliegend zueinander angeordnet sind und damit mittels eines Verdrehens, Verkantens und/oder Verschwenkens in den Hinterschnitt einbringbar sind und durch ein Verdrehen hinter dem Hinterschnitt dann befestigt werden können. Somit ist das Einbringen eines Befestigungshalters sogar in einer halb befestigten Position zwischen der unmontierten Position und der montierten Position weiterhin ermöglicht.

Insbesondere ist die jeweilige Hinterschnittaufnahme derart ausgebildet, dass sie einen schlossförmig ausgebildeten Durchbruch aufweist und der jeweilige Hinterschnitt eine korrespondierend schlüsselförmig ausgebildete Geometrie aufweist, wobei das Hindurchführen der jeweiligen Befestigungshalters durch die jeweilige Befestigungsdurchführung mittels eines Verschwenkens und/oder mittels eines Verdrehens des jeweiligen Befestigungshalters aus einer Befestigungsposition ermöglicht ist, wobei dem Befestigungshalter insbesondere ein ringförmiges Befestigungsmittel zugeordnet ist und das ringförmige Befestigungsmittel die schlüsselförmige Geometrie bildet.

Somit kann beispielsweise mit einem ringförmigen Befestigungsmittel und einem entsprechend ausgebildeten Befestigungshalter ein nachträgliches Einbringen des Befestigungshalters mit dem ringförmigen Befestigungsmittel ohne weiteres Werkzeug erfolgen, wobei der Befestigungshalter und das ringförmige Befestigungsmittel insbesondere in der montierten Position sodann durch die Geometrie des Hinterschnitts und die Ausgestaltung der jeweiligen Grundkörperteil fixiert, insbesondere jedoch weiterhin drehbar, im Grundkörper aufgenommen sind.

In einem weiteren Aspekt wird die Aufgabe gelöst durch ein Flächenelement, insbesondere eine Plane, eine Gewebeplane oder insbesondere eine Abdeckplane, mit einer Befestigungsvorrichtung oder mehreren Befestigungsvorrichtungen gemäß einer der vorigen Ausführungsformen.

Mittels mehrerer Befestigungsvorrichtungen, welche beispielsweise frei in der Fläche des Flächenelementes positioniert werden können, können am Beispiel einer Plane für Feuerholz an einem geometrisch unförmigen Feuerholzstapel an entsprechenden Kanten und Ecken Befestigungspunkte gesetzt werden, mittels derer sodann die Abdeckplane für das Feuerholz verzurrt werden kann.

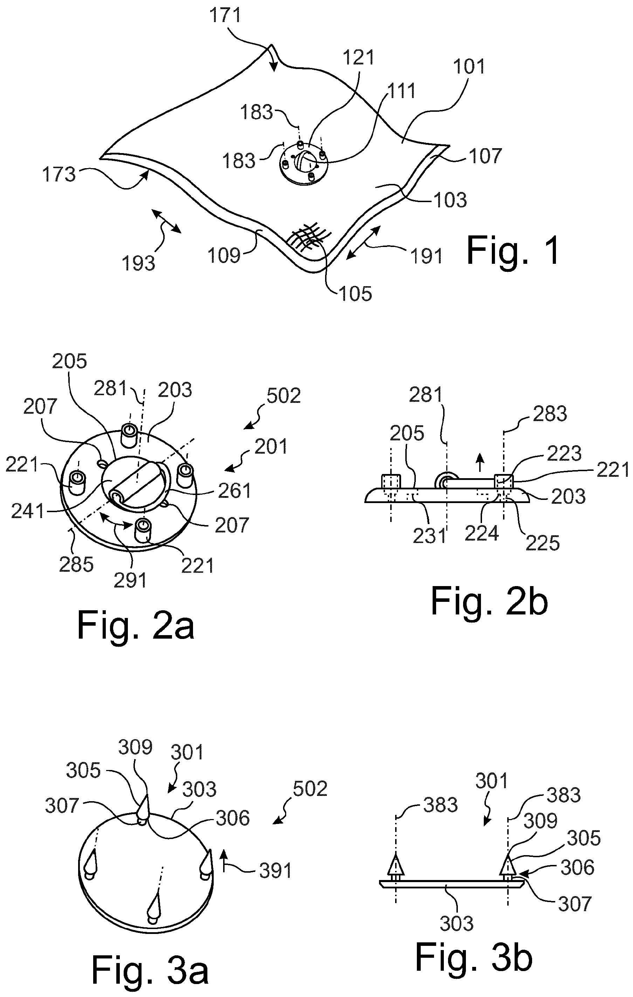

Im Weiteren wird die Erfindung anhand von Ausführungsbeispielen näher erläutert. Es zeigen
- Figur 1: eine schematische Darstellung einer Gewebeplane mit einer Befestigung in einer isometrischen Ansicht,
- Figur 2a: eine schematische Darstellung eines Oberteils der Befestigung der Figur 1 in einer isometrischen Ansicht,
- Figur 2b: eine Schnittdarstellung des Oberteils der Figur 2a in einer Seitenansicht,
- Figur 3a: eine schematische Darstellung eines Unterteils der Befestigung der Figur 1 in einer isometrischen Darstellung,
- Figur 3b: eine Seitenansicht des Unterteils der Figur 3a,

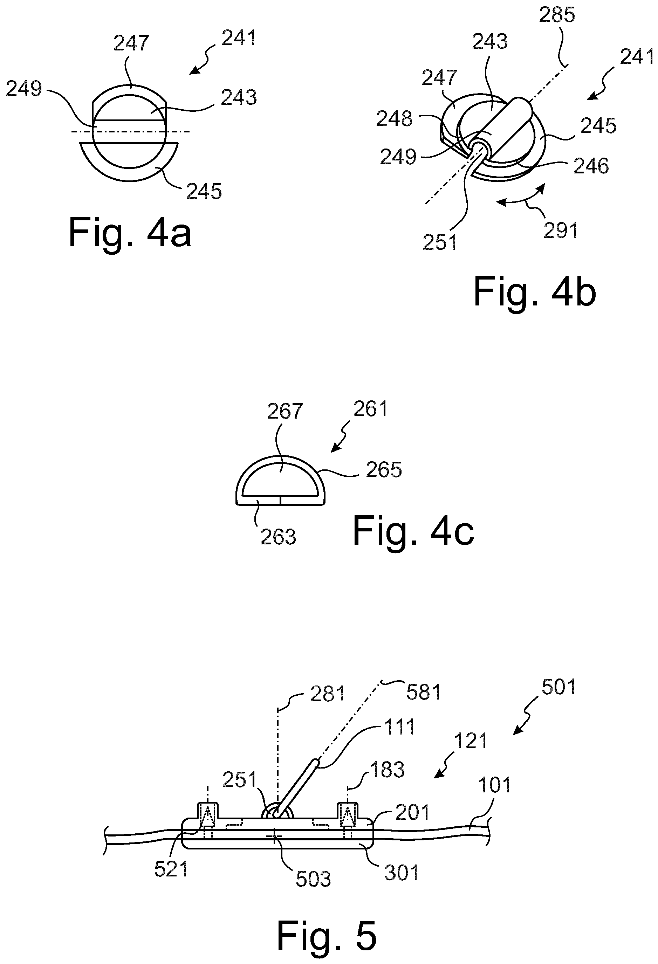

- Figur 4a: eine schematische Darstellung eines Halteclips der Befestigung der Figur 1 in einer Draufsicht,
- Figur 4b: den Halteclip der Figur 4a in einer isometrischen Darstellung,
- Figur 4c: einen D-Ring der Befestigung der Figur 1 in einer Seitenansicht, sowie
- Figur 5: eine teilweise geschnittene, schematische Darstellung der Befestigung an einer Befestigungsposition innerhalb der Gewebeplane der Figur 1.

Eine Gewebeplane 101 dient dem Abdecken von Gegenständen, beispielsweise Feuerholz. Die Gewebeplane weist eine wasserundurchdringliche Folie 103 auf, welche mit einem Gewebe 105 aus Fasern, beispielsweise Polyethylenfasern, durchsetzt ist. Durch das Gewebe 105 ist die Gewebeplane 101 in Flächenrichtung entlang einer Breitenrichtung 193 und einer Längenrichtung 191 besonders reißfest. An einer jeweiligen Kante der Gewebeplane 101 sind mit einem Kantensaum 107 und einem Kantensaum 109 entsprechende Ränder der Plane gegen mechanische Belastungen zusätzlich geschützt. Innerhalb der Gewebeplane 101 ist an einer Oberseite 171 eine Befestigung 121 angeordnet, an die beispielsweise ein Gurtband oder ein Seil angebracht werden kann, um die Gewebeplane über dem in diesem Beispiel genannten Feuerholz zu verzurren. Dabei ist die Befestigung 121 frei innerhalb der Fläche entlang der Längenrichtung 191 und der Breitenrichtung 193 positionierbar.

Die Befestigung 121 ist mehrteilig aufgebaut und weist ein Oberteil 201, ein Unterteil 301, einen Halteclip 241 sowie einen D-Ring 261 auf. Der D-Ring 261 bildet dabei einen Befestigungspunkt 111. Die jeweiligen Bestandteile seien hierbei zunächst einzeln und voneinander gelöst, also in einer unmontierten Position, nämlich einer Ausgangsposition 502, beschrieben:

Das Oberteil 201 weist einen runden Grundkörper 203 auf. Symmetrisch um eine Befestigungsachse 281 angeordnet sind am Grundkörper 203 Hohlzapfen 221 turmartig aufgesetzt, wobei jeder Hohlzapfen 221 einen Durchbruch 223, einen innenliegenden Absatz 224 sowie einen gegenüber dem Durchbruch 223 verkleinerten Durchbruch 225 aufweist. Mittig im Grundkörper 203 ist symmetrisch zur Befestigungsachse 281 ein Durchbruch 205 angeordnet, welcher an zwei gegenüberliegenden Punkten seiner runden Ausgestaltung jeweilige Ausschnitte 207 aufweist. Unterhalb des Durchbruchs 205 ist weiterhin ein Hinterschnitt 231 angeordnet, sodass der Durchbruch 205 insgesamt stufenweise ausgebildet ist.

Das Unterteil 301 weist ebenfalls einen runden und in seiner Größe und Form zum Grundkörper 203 des Oberteils 201 korrespondierenden Grundkörper 303 auf. Entlang entsprechender Stechachsen 383 ist kongruent zur Anordnung der Hohlzapfen 221 am Oberteil 201 jeweils ein Kegeldorn 305 angeordnet, welcher mit einer Spitze 309 vom Grundkörper 303 wegweist und mittels eines Absatzes 306 an einen gegenüber dem Kegeldorn 305 verkleinerten Zylinderzapfen 307 angeschlossen ist. Mittels des Zylinderzapfens 207 ist der Kegeldorn 305 stoffschlüssig mit dem Grundkörper 303 verbunden. Die Stechachsen 383 sind dabei bei einem Übereinanderbringen des Oberteils 201 mit dem Unterteil 301 mit entsprechenden Halteachsen 283 des Oberteils 201 identisch.

Innerhalb des Hinterschnittes 231 am Durchbruch 205 kann ein Halteclip 241 aufgenommen werden. Der Halteclip 241 weist ein rundes Mittelstück 243 auf, wobei eine äußere Berandung des runden Mittelstücks 243 derart bemessen ist, dass das Mittelstück 243 drehbar im Durchbruch 205 am Oberteil 201 aufnehmbar ist. Eine Lasche 245 sowie eine Lasche 247 sind dabei unterhalb des Hinterschnittes 231 angeordnet, sodass der Halteclip 241 in eine Richtung formschlüssig im Durchbruch 205 angeordnet und gehalten ist. Die Laschen 245 und 247 sind dabei mit Absätzen 246 und 248 vom Mittelstück 243 abgesetzt, sodass eine Oberfläche des Mittelstücks 243 flächig mit einer Oberfläche des Oberteils 201 angeordnet ist, sofern der Halteclip 241 korrekt im Durchbruch 205 aufgenommen ist. Innerhalb des Mittelstücks 243 ist ein Tunnelstück 249 aufgebracht, welches einen Tunnel 251 ausformt. Innerhalb des Tunnels 251 kann so ein D-Ring 261 aufgenommen werden, wobei der D-Ring 261 bei Anordnung des Halteclips 241 im Durchbruch 205 des Oberteils 201 den Halteclip 241 formschlüssig innerhalb des Durchbruchs 205 hält. Wird der Halteclip 241 entlang einer Drehung 291 rotiert, so kann der D-Ring 261 mit den Ausschnitten 207 übereinander gebracht werden, sodass der Halteclip 241 mit dem D-Ring 261 durch den Grundkörper 203 des Oberteils 201 hindurch aus dem Oberteil 201 entfernt werden kann. Ebenso kann der Halteclip 241 derart verdreht werden, dass überstehende Teile der Lasche 245 durch die Ausschnitte 207 gleiten können, sodass der Halteclip 241 mit dem D-Ring 261 auf vielfältige Weise montiert werden kann.

Der D-Ring 261 weist einen Linearabschnitt 263 auf, welcher im Tunnel 251 angeordnet werden kann. Ein Ringabschnitt 265 formt ausgehend vom Linearabschnitt 263 ein Ringloch 267, wobei im Ringloch 267 beispielsweise ein Karabinerhaken eingehängt oder ein Seil eingeknotet werden kann, sodass der D-Ring 261 eine kraft- und formschlüssige Verbindung herstellt, welche sodann mittels des Halteclips 241 mit dem Oberteil 201 verbunden wird.

Im Folgenden sei die Montage der Befestigung 221 an der Gewebeplane 101 detailliert beschrieben:

Zunächst werden der D-Ring 261 und der Halteclip 241 miteinander verbunden, indem der Linearabschnitt 263 in den Tunnel 251 eingelegt wird. Sodann kann der Halteclip 241 mit dem D-Ring 261 durch die Ausschnitte 207 in das Oberteil 201 eingeführt und mittels eines Drehens entlang der Drehung 291 temporär gesichert werden. Dabei kann der D-Ring 261 auf dem Grundkörper 203 des Oberteils 201 aufliegen.

Nachfolgend wird das Oberteil 201 mit dem Halteclip 241 und dem D-Ring 261 an einer Befestigungspostion 503 auf die Oberseite 171 der Gewebeplane 101 aufgelegt. Sodann wird das Unterteil 301 von einer Unterseite 173 mit den Spitzen 309 durch die Gewebeplane 101 gestochen, sodass im hier beschriebenen Beispiel vier Öffnungen in der Gewebeplane gebildet werden, die beispielsweise zwischen entsprechenden Fäden des Gewebes liegen. Die Kegeldorne 305 treten dann in die Durchbrüche 225 ein, wobei die Kegeldorne elastisch verformt werden, sodass der jeweilige Absatz 306 mit dem jeweiligen Absatz 224 am Durchbruch 223 formschlüssig und irreversibel verrastet. Damit werden das Oberteil 201 und das Unterteil 301 in eine Verbindungsposition 501 überführt. Die Gewebeplane 101 wird dabei zwischen dem Oberteil 201 und dem Unterteil 301 eingeklemmt und zusätzlich durch die in den geschaffenen Öffnungen angeordneten Zylinderzapfen 307 gehalten, sodass an der Befestigungsposition 503 mit dem Befestigungspunkt 111 eine Möglichkeit zum Befestigen der Gewebeplane 101 geschaffen ist.

Durch die Beweglichkeit des D-Rings 261 innerhalb des Tunnels 251 und eine Drehbarkeit des Halteclips 241 innerhalb des Oberteils 201 kann sodann ein Befestigen der Gewebeplane 101 entlang einer frei wählbaren Zugachse 581 erfolgen, ohne dass am Befestigungspunkt 111 eine Durchdringung der Gewebeplane 101, welche ein Schwächung herbeiführen kann, erforderlich ist.

Es sei hierzu erwähnt, Es sei hierzu erwähnt, dass beispielsweise auch das Unterteil 301 analog zum Oberteil 201 ausgebildet sein kann, wobei die Kegeldorne 305 erhalten bleiben. Somit kann auch gegenüberliegend zum **D-**Ring 261 beispielsweise an einer Unterseite der Gewebeplane 101 ein weiterer Befestigungspunkt gegenüber dem Befestigungspunkt 111 geschaffen werden, ohne dass die Gewebeplane 101 im Bereich der Krafteinleitung durchdrungen werden muss.

Weiterhin sei erwähnt, dass die hier gezeigte Verrastung 521 der Kegeldorne 305 mit den jeweiligen Durchbrüchen 223 eine besonders einfache und bequeme Befestigungsmöglichkeit darstellt, die Befestigung jedoch auch durch beispielsweise entlang der Halteachsen 283 laufende Schrauben, Nieten oder andere Befestigungselemente erreicht werden kann.

### Bezugszeichenliste

- 101: Gewebeplane
- 103: Folie
- 105: Gewebe
- 107: Kantensaum
- 109: Kantensaum
- 111: Befestigungspunkt
- 121: Befestigung
- 171: Oberseite
- 173: Unterseite
- 183: Durchdringungsachse
- 191: Längenrichtung
- 193: Breitenrichtung
- 201: Oberteil
- 203: Grundkörper
- 205: Durchbruch
- 207: Ausschnitt
- 221: Hohlzapfen
- 223: Durchbruch
- 224: Absatz
- 225: Durchbruch
- 231: Hinterschnitt
- 241: Halteclip
- 243: Mittelstück
- 245: Lasche
- 246: Absatz
- 247: Lasche
- 248: Absatz
- 249: Tunnelstück
- 251: Tunnel
- 261: D-Ring
- 263: Linearabschnitt
- 265: Ringabschnitt
- 267: Ringloch
- 281: Befestigungsachse
- 283: Halteachse
- 285: Schwenkachse
- 291: Drehung
- 301: Unterteil
- 303: Grundkörper
- 305: Kegeldorn
- 306: Absatz
- 307: Zylinderzapfen
- 309: Spitze
- 383: Stechachse
- 391: Verbindungsrichtung
- 501: Verbindungsposition
- 502: Ausgangsposition
- 503: Befestigungsposition
- 521: Verrastung
- 581: Zugachse

## Patentansprüche

1. Befestigungsvorrichtung (121) zum Erstellen eines frei positionierbaren ersten Befestigungspunktes (111) an einem biegeschlaffen Flächenelement (101), insbesondere an einer Plane oder an einer Gewebeplane (101), mit einem ersten Grundkörperteil (301) und einem zweiten Grundkörperteil (201), wobei das erste Grundkörperteil (301) ein erstes Eingriffssteil (305) aufweist und das zweite Grundkörperteil (201) ein erstes Aufnahmeteil (225) aufweist, wobei das erste Grundkörperteil (301) und das zweite Grundkörperteil (201) in einer unmontierten Position (502) separat und unverbunden vorliegen und in einer montierten Position (501) durch zumindest eine Öffnung in der Flächenebene (191, 193) des Flächenelementes (101) hindurch mittels eines formschlüssigen Fixierens des ersten Eingriffsteils (305) mit dem ersten Aufnahmeteil (225) entlang einer ersten Durchdringungsachse (183) miteinander zu einem Grundkörper (201, 301) verbunden werden, wobei der Grundkörper (201, 301) eine erste kraftschlüssig mit dem Grundkörper (201, 301) verbundene Befestigungseinrichtung (261) aufweist und in der montierten Position (501) das Flächenelement (101) zwischen dem ersten Grundkörperteil (301) und dem zweiten Grundkörperteil (201) gehalten ist und mittels der ersten Befestigungseinrichtung (261) der erste Befestigungspunkt (111) an einer Befestigungsposition (503) des Flächenelementes (101) gebildet ist, wobei die erste Befestigungseinrichtung (261) vollständig an einem der beiden Grundkörperteile (201) angeordnet ist, sodass ein Bilden des ersten Befestigungspunktes (111) entlang der Flächenebene (101) an einer ersten Befestigungsseite (171) des Flächenelementes (101) frei von einer Durchdringung des Flächenelementes (101) mit der ersten Befestigungseinrichtung (261) ermöglicht ist, wobei das erste Grundkörperteil (301) ein zweites, ein drittes, ein viertes und/oder ein weiteres Eingriffsteil (305) und/oder das zweite Grundkörperteil (201) ein zweites, ein drittes, ein viertes und/oder ein weiteres Aufnahmeteil (225) aufweist, wobei das erste Grundkörperteil (301) und das zweite Grundkörperteil (201) in einer montierten Position (501) durch eine zweite Öffnung, eine dritte Öffnung, eine vierte Öffnung und/oder eine weitere Öffnung in der Flächenebene (191, 193) des Flächenelementes (101) hindurch mittels eines formschlüssigen Fixierens des jeweiligen Eingriffsteils (305) mit einem jeweiligen Aufnahmeteil (225) entlang einer zweiten Durchdringungsachse (183), entlang einer dritten Durchdringungsachse (183), entlang einer vierten Durchdringungsachse (183) und/oder entlang einer weiteren Durchdringungsachse (183) miteinander verbunden werden,
**dadurch gekennzeichnet, dass**
ein Eingriffsteil (305) und/oder ein jeweiliger Eingriffsteil (305) mittels eines jeweiligen Eingriffshinterschnitts (306) gegenüber einer Auszugsrichtung entlang der jeweiligen Durchdringungsachse (183, 383) rastend ausgebildet ist, wobei das jeweilige dem Eingriffsteil (305) zugeordnete Aufnahmeteil (225) mittels eines Aufnahmehinterschnitts (224) gegenüber der Auszugsrichtung entlang der jeweiligen Durchdringungsachse (183, 283) rastend ausgebildet ist, wobei bei einem miteinander in Eingriff Bringens des jeweiligen Eingriffsteils (305) mit dem jeweiligen Aufnahmeteil (225) ein formschlüssig irreversibles Verbinden des ersten Grundkörperteils (301) mit dem zweiten Grundkörperteil (201) erfolgt.

2. Befestigungsvorrichtung gemäß Anspruch 1, **dadurch gekennzeichnet, dass** eine zweite Befestigungseinrichtung vollständig am anderen der Grundkörperteile (301) angeordnet ist und mittels der zweiten Befestigungseinrichtung in der montierten Position (501) das Bilden eines zweiten Befestigungspunktes entlang der Flächenebene (191, 193) an einer gegenüber der ersten Befestigungsseite (171) angeordneten zweiten Befestigungsseite (173) des Flächenelementes (101) frei von einer Durchdringung des Flächenelementes (101) mit der zweiten Befestigungseinrichtung ermöglicht ist.

3. Befestigungsvorrichtung gemäß Anspruch 1 oder 2, **dadurch gekennzeichnet, dass** die jeweiligen Durchdringungsachsen (183) vom Befestigungspunkt (121) beabstandet angeordnet sind.

4. Befestigungsvorrichtung gemäß einem der vorherigen Ansprüche, **dadurch gekennzeichnet, dass** die jeweiligen Durchdringungsachsen (183) in einer matrixartigen Anordnung und/oder in einer mehreckigen Anordnung angeordnet sind, wobei die jeweiligen Durchdringungsachsen (183) insbesondere symmetrisch zum ersten Befestigungspunkt (111) und/oder symmetrisch zum zweiten Befestigungspunkt angeordnet sind.

5. Befestigungsvorrichtung gemäß einem der vorherigen Ansprüche, **dadurch gekennzeichnet, dass** zwei Durchdringungsachsen (183), mehrere Durchdringungsachsen (183) oder alle Durchdringungsachsen (183) im Wesentlichen parallel zueinander angeordnet sind.

6. Befestigungsvorrichtung gemäß einem der vorherigen Ansprüche, **dadurch gekennzeichnet, dass** ein Eingriffsteil (305), mehrere Eingriffsteile (305) oder alle Eingriffsteile (305) eine in Richtung der jeweiligen Durchdringungsachse (183, 383) ausgerichtete Spitze (309) zum Ausformen der jeweiligen Öffnung im Flächenelement (101) aufweist, wobei der Eingriffsteil (305) und/oder der jeweilige Eingriffssteil (305) insbesondere einen runder Durchdringungsquerschnitt mit einer kegelförmigen Spitze (305, 309) aufweist.

7. Befestigungsvorrichtung gemäß einem der vorherigen Ansprüche, **dadurch gekennzeichnet, dass** die erste Befestigungseinrichtung (261) und/oder die zweite Befestigungseinrichtung einen jeweiligen Befestigungshalter (241) aufweist, wobei der jeweilige Befestigungshalter (241) durch eine jeweilige Befestigungsdurchführung (205) im jeweiligen Grundkörperteil (201) hindurchführbar ist und einen jeweiligen Hinterschnitt (245, 247) aufweist, wobei der jeweilige Hinterschnitt (245, 247) in eine jeweilige Hinterschnittaufnahme (231) des jeweiligen Grundkörperteils (201) verriegelbar ist und den jeweiligen Befestigungshalter (241) in einer verriegelten Position in der Hinterschnittaufnahme (231) formschlüssig fixiert und/oder der Befestigungshalter (241) beweglich, insbesondere drehbar (291) gegenüber dem jeweiligen Grundkörperteil (201) am jeweiligen Grundkörperteil (201) aufgenommen ist.

8. Befestigungsvorrichtung gemäß Anspruch 7, **dadurch gekennzeichnet, dass** die jeweilige Hinterschnittaufnahme (205) einen schlossförmig ausgebildete Durchbruch (207) und der jeweilige Hinterschnitt (245, 247) eine korrespondierend schlüsselförmig ausgebildete Geometrie (245, 247, 261) aufweist, wobei das Hindurchführen der jeweiligen Befestigungshalters (241) durch die jeweilige Befestigungsdurchführung (205) mittels eines Verschwenkens und/oder mittels eines Verdrehens des jeweiligen Befestigungshalters (241) aus einer Befestigungsposition ermöglicht ist, wobei dem Befestigungshalter (241) insbesondere ein ringförmiges Befestigungsmittel (261) zugeordnet ist und das ringförmige Befestigungsmittel (261) die schlüsselförmige Geometrie (261) bildet.

9. Flächenelement (101), insbesondere Plane, Gewebeplane (101) oder insbesondere Abdeckplane, mit einer Befestigungsvorrichtung (121) oder mehreren Befestigungsvorrichtungen (121) gemäß einem der vorherigen Ansprüche.

## Claims

1. Fastening device (121) for creating a freely positionable first fastening point (111) on a flexible sheet element (101), in particular on a tarpaulin or on a fabric tarpaulin (101), having a first base body part (301) and a second base body part (201), wherein the first base body part (301) comprises a first receiving part (225), wherein the first base body part (301) comprises a first engagement part (305) and the second base body part (201) comprises a first receiving part (201), wherein the first base body part (301) and the second base body part (201) are present separately and unconnected in an unassembled position (502) and, in an assembled position (501), are connected to one another to form a base body (201, 301) through at least one opening in the sheet plane (191, 193) of the sheet element (101) by means of a form-fitting fixing of the first engagement part (305) with the first receiving part (225) along a first penetration axis (183), wherein the base body (201, 301) comprises a first fastening means (261) connected to the base body (201, 301) in a force-fitting manner and, in the assembled position (501), the sheet element (101) is held between the first base body part (301) and the second base body part (201) and, by means of the first fastening means (261), the first fastening point (111) is formed at a fastening position (503) of the sheet element (101), wherein the first fastening means (261) is arranged completely on one of the two base body parts (201), such that forming the first fastening point (111) along the sheet plane (101) on a first fastening side (171) of the sheet element (101) is enabled free of a penetration of the sheet element (101) with the first fastening means (261), wherein the first base body part (301) comprises a first, a second, a third, a fourth and/or a further engagement part (305) and/or the second base body part (201) comprises a second, a third, a fourth and/or a further receiving part (225), wherein the first base body part (301) and the second base body part (201), in an assembled position (501), are connected to one another through a second opening, a third opening, a fourth opening and/or a further opening in the sheet plane (191, 193) of the sheet element (101) by means of a form-fitting fixing of the respective engagement part (305) with a respective receiving part (225) along a second penetration axis (183), along a third penetration axis (183), along a fourth penetration axis (183) and/or along a further penetration axis (183), **characterized in that** an engagement part (305) and/or a respective engagement part (305) is formed in a latching manner by means of an engagement undercut (306) with respect to a pull-out direction along the respective penetration axis (183, 383), wherein the respective receiving part (225) assigned to the engagement part (305) is formed in a latching manner by means of a receiving undercut (224) with respect to the pull-out direction along the respective penetration axis (183, 283), wherein, when bringing the respective engagement part (305) into engagement with the respective receiving part (225), a form-fitting irreversible connection of the first base body part (301) with the second base body part (201) takes place.

2. Fastening device **characterized in that**, according to second claim 1, the fastening means is arranged completely on the other of the base body parts (301) and, by means of the second fastening means in the assembled position (501), forming a second fastening point along the sheet plane (191, 193) on a second fastening side (173) of the sheet element (101) arranged opposite the first fastening side (171) is enabled free of a penetration of the sheet element (101) with the second fastening means.

3. Fastening device according to claim 1 or 2, **characterized in that** the respective penetration axes (183) are arranged at a distance from the fastening point (121).

4. Fastening device according to one of the preceding claims, **characterized in that** the respective penetration axes (183) are arranged in a matrix-like arrangement and/or in a polygonal arrangement, wherein the respective penetration axes (183) are in particular arranged symmetrically with respect to the first fastening point (111) and/or symmetrically with respect to the second fastening point.

5. Fastening device according to one of the preceding claims, **characterized in that** two penetration axes (183), several penetration axes (183) or all penetration axes (183) are arranged essentially parallel to one another.

6. Fastening device according to one of the preceding claims, **characterized in that** an engagement part (305), several engagement parts (305) or all engagement parts (305) have a tip (309) aligned in the direction of the respective penetration axis (183, 383) for forming the respective opening in the sheet element (101), wherein the engagement part (305) and/or the respective engagement part (305) in particular has a round penetration cross-section with a conical tip (305, 309).

7. Fastening device according to one of the claims, **characterized in that** the fastening means (261) and/or the first and the second fastening means have a respective fastening holder (241), wherein the respective fastening holder (241) can be guided through a respective fastening passage (205) through the respective base body part (201) and has a respective undercut (245, 247), wherein the respective undercut (245, 247) can be locked into a respective undercut receiving recess (231) of the respective base body part (201) and fixes the respective fastening holder (241) in a locked position in the undercut receiving recess (231) in a form-fitting manner and/or the fastening holder (241) is received movably, in particular rotatably (291), relative to the respective base body part (201) on the respective base body part (201).

8. Fastening device according to claim 7, **characterized in that** the respective undercut receiving recess (205) has a lock-shaped opening (207) and the respective undercut (245, 247) has a correspondingly key-shaped geometry (245, 247, 261), wherein guiding the respective fastening holder (241) through the respective fastening passage (205) is enabled by pivoting and/or by twisting the respective fastening holder (241), wherein a ring-shaped fastening means (261) is in particular assigned to the fastening holder (241) from a fastening position and the ring-shaped fastening means (261) forms the key-shaped geometry (261).

9. Sheet element (101), in particular tarpaulin, fabric tarpaulin (101) or in particular cover tarpaulin, with a fastening device (121) or several fastening devices (121) according to one of the preceding claims.

## Revendications

1. Dispositif de fixation (121) destiné à créer un premier point de fixation (111) librement positionnable sur un élément de surface souple (101), en particulier sur une bâche ou sur une bâche en tissu (101), comprenant une première partie de corps de base (301) et une deuxième partie de corps de base (201), la première partie de corps de base (301) présentant une première partie de réception (225), la première partie de corps de base (301) présentant une première partie d'engagement (305) et la deuxième partie de corps de base (201) présentant une première partie de réception (201), la première partie de corps de base (301) et la deuxième partie de corps de base (201) étant, dans une position non montée (502), séparées et non reliées et, dans une position montée (501), étant reliées l'une à l'autre pour former un corps de base (201, 301) à travers au moins une ouverture dans le plan de surface (191, 193) de l'élément de surface (101) au moyen d'une fixation par complémentarité de forme de la première partie d'engagement (305) avec la première partie de réception (225) le long d'un premier axe de pénétration (183), le corps de base (201, 301) présentant un premier organe de fixation (261) relié au corps de base (201, 301) par adhérence et, dans la position montée (501), l'élément de surface (101) étant maintenu entre la première partie de corps de base (301) et la deuxième partie de corps de base (201) et, au moyen du premier organe de fixation (261), le premier point de fixation (111) étant formé à une position de fixation (503) de l'élément de surface (101), le premier organe de fixation (261) étant disposé entièrement sur l'une des deux parties de corps de base (201), de sorte que la formation du premier point de fixation (111) le long du plan de surface (101) sur un premier côté de fixation (171) de l'élément de surface (101) est rendue possible sans pénétration de l'élément de surface (101) par le premier organe de fixation (261), la première partie de corps de base (301) présentant une première, une deuxième, une troisième, une quatrième et/ou une autre partie d'engagement (305) et/ou la deuxième partie de corps de base (201) présentant une deuxième, une troisième, une quatrième et/ou une autre partie de réception (225), la première partie de corps de base (301) et la deuxième partie de corps de base (201) étant, dans une position montée (501), reliées l'une à l'autre à travers une deuxième ouverture, une troisième ouverture, une quatrième ouverture et/ou une autre ouverture dans le plan de surface (191, 193) de l'élément de surface (101) au moyen d'une fixation par complémentarité de forme de la partie d'engagement (305) respective avec une partie de réception (225) respective le long d'un deuxième axe de pénétration (183), le long d'un troisième axe de pénétration (183), le long d'un quatrième axe de pénétration (183) et/ou le long d'un autre axe de pénétration (183), **caractérisé en ce qu'**une partie d'engagement (305) et/ou une partie d'engagement (305) respective est réalisée de manière encliquetable au moyen d'un contre-dépouille d'engagement (306) par rapport à une direction d'extraction le long de l'axe de pénétration (183, 383) respectif, la partie de réception (225) respective associée à la partie d'engagement (305) étant réalisée de manière encliquetable au moyen d'une contre-dépouille de réception (224) par rapport à la direction d'extraction le long de l'axe de pénétration (183, 283) respectif, et, lors de la mise en engagement de la partie d'engagement (305) respective avec la partie de réception (225) respective, une liaison irréversible par complémentarité de forme de la première partie de corps de base (301) avec la deuxième partie de corps de base (201) est effectuée.

2. Dispositif de fixation **caractérisé en ce que**, conformément à la deuxième revendication 1, l'organe de fixation est disposé entièrement sur l'autre des parties de corps de base (301) et, au moyen du deuxième organe de fixation dans la position montée (501), la formation d'un deuxième point de fixation le long du plan de surface (191, 193) sur un deuxième côté de fixation (173) de l'élément de surface (101), disposé en face du premier côté de fixation (171), est rendue possible sans pénétration de l'élément de surface (101) par le deuxième organe de fixation.

3. Dispositif de fixation selon la revendication 1 ou 2, **caractérisé en ce que** les axes de pénétration (183) respectifs sont disposés à distance du point de fixation (121).

4. Dispositif de fixation selon l'une des revendications précédentes, **caractérisé en ce que** les axes de pénétration (183) respectifs sont disposés selon un agencement de type matriciel et/ou selon un agencement polygonal, les axes de pénétration (183) respectifs étant en particulier disposés de manière symétrique par rapport au premier point de fixation (111) et/ou de manière symétrique par rapport au deuxième point de fixation.

5. Dispositif de fixation selon l'une des revendications précédentes, **caractérisé en ce que** deux axes de pénétration (183), plusieurs axes de pénétration (183) ou tous les axes de pénétration (183) sont disposés essentiellement parallèles les uns aux autres.

6. Dispositif de fixation selon l'une des revendications précédentes, **caractérisé en ce qu'**une partie d'engagement (305), plusieurs parties d'engagement (305) ou toutes les parties d'engagement (305) présentent une pointe (309) orientée dans la direction de l'axe de pénétration (183, 383) respectif pour former l'ouverture respective dans l'élément de surface (101), la partie d'engagement (305) et/ou la partie d'engagement (305) respective présentant en particulier une section de pénétration ronde avec une pointe conique (305, 309).

7. Dispositif de fixation selon l'une des revendications, **caractérisé en ce que** l'organe de fixation (261) et/ou le premier et le deuxième organes de fixation présentent un support de fixation (241) respectif, le support de fixation (241) respectif pouvant être introduit à travers un passage de fixation (205) respectif au travers de la partie de corps de base (201) respective et présentant une contre-dépouille (245, 247) respective, la contre-dépouille (245, 247) respective pouvant être verrouillée dans un logement de contre-dépouille (231) respectif de la partie de corps de base (201) respective et fixant le support de fixation (241) respectif en position verrouillée dans le logement de contre-dépouille (231) par complémentarité de forme et/ou le support de fixation (241) étant reçu de manière mobile, en particulier pivotante (291), par rapport à la partie de corps de base (201) respective sur la partie de corps de base (201) respective.

8. Dispositif de fixation selon la revendication 7, **caractérisé en ce que** le logement de contre-dépouille (205) respectif présente une ouverture (207) de forme de serrure et la contre-dépouille (245, 247) respective présente une géométrie (245, 247, 261) de forme de clé correspondante, l'introduction du support de fixation (241) respectif à travers le passage de fixation (205) respectif étant rendue possible au moyen d'un pivotement et/ou au moyen d'une rotation du support de fixation (241) respectif, un moyen de fixation annulaire (261) étant en particulier associé au support de fixation (241) à partir d'une position de fixation et le moyen de fixation annulaire (261) formant la géométrie de forme de clé (261).

9. Élément de surface (101), en particulier bâche, bâche en tissu (101) ou, en particulier, bâche de couverture, avec un dispositif de fixation (121) ou plusieurs dispositifs de fixation (121) selon l'une des revendications précédentes.
